# EUROPEAN PATENT APPLICATION

(11) **EP 4 786 848 A1**
(43) Date of publication of application: **05.08.2026**
(21) Application number: 23953320.1
(22) Date of filing: 25.09.2023
(51) Int. Cl.: F21V 13/02, F21S 8/00

(54) **AMBIENT LIGHTING STRUCTURE, INSTRUMENT PANEL ASSEMBLY AND VEHICLE**

(71) Applicant: Zhejiang Geely Holding Group Co., Ltd, Hangzhou City, Zhejiang 310051 (CN); Geely Automobile Research Institute (Ning Bo) Co., Ltd., Ningbo, Zhejiang 315336 (CN)
(72) Inventor: QUAN, Zhixi, Hangzhou, Zhejiang 310051 (CN); ZHANG, Liangliang, Hangzhou, Zhejiang 310051 (CN); GUAN, Zhongxue, Hangzhou, Zhejiang 310051 (CN)
(74) Representative: Murgitroyd & Company
(86) International application number: PCT/CN2023/121124
(87) International publication number: WO 2025/065155

(57) **Abstract**

The present application is provided with a light-transmitting portion; the light-reflecting member and the light-transmitting portion are spaced apart from each other, the end face of the light-transmitting portion that faces the light-reflecting member being provided with a semitransparent layer; and the light-guiding member is used for transmitting light emitted by the light-emitting source and guiding same to the end face of the light-reflecting member that faces the semitransparent layer and/or to the end face of the semitransparent layer that faces the light-reflecting member. In the ambient lighting structure of the present application, light is reflected back and forth between the semitransparent layer and the light-reflecting member, resulting in a gradual decrease in the intensity of light emitted from the light-transmitting portion of the shell due to light attenuation, thereby providing a highly three-dimensional light-emitting effect.

## Description

### Technical Field

The present application relates to the technical field of vehicles, and in particular to an ambient lighting structure, an instrument panel assembly, and a vehicle.

### Background Art

As the vehicle industry continues to develop, people have increasingly high requirements for vehicle interiors, so more and more vehicle models choose to add ambient lights in positions such as the dashboard, doors, and roof inside the vehicle to enhance the interior environment atmosphere.

However, current ambient lights are mainly used as direct linear light sources, reflective linear light sources, and direct surface light sources for direct light emission; the emitted light has a planar effect, which is lacking in aesthetic level and difficult to meet people's pursuit of visual aesthetics.

### Summary of the Invention

To solve at least one aspect of the above problems, the present application provides an ambient lighting structure, an instrument panel assembly, and a vehicle.

On one hand, the present application provides an ambient lighting structure including a shell, and a light-emitting source, a light-guiding member and a light-reflecting member which are arranged in the shell, the shell is provided with a light-transmitting portion, the light-reflecting member and the light-transmitting portion are spaced apart from each other, an end face of the light-transmitting portion that faces the light-reflecting member being provided with a semitransparent layer; and the light-guiding member is used for transmitting light emitted by the light-emitting source and guiding same to an end face of the light-reflecting member that faces the semitransparent layer and/or to an end face of the semitransparent layer that faces the light-reflecting member.

Alternatively, the semitransparent layer is a semitransparent electroplated layer or a semitransparent film; and/or, the end face of the light-reflecting member that faces the light-transmitting portion is provided with a light-reflecting layer, and the light-reflecting layer is a high-brightness electroplated layer or a high-brightness reflective film.

Alternatively, the shell includes a mask and a rear shell in detachable connection, the mask is provided with the light-transmitting portion, the mask and the rear shell enclose to form an accommodating cavity structure, and the light-emitting source, the light-guiding member and the light-reflecting member are arranged in the accommodating cavity structure.

Alternatively, the light-reflecting member includes a first light-reflecting plate, the accommodating cavity structure includes a first accommodating cavity and a second accommodating cavity communicated with each other at an angle, the light-guiding member is of a bent structure, a part of the light-guiding member and the light-emitting source are both located in the first accommodating cavity, the other part of the light-guiding member and the first light-reflecting plate are both located in the second accommodating cavity, and the first light-reflecting plate and the light-transmitting portion are spaced apart from each other.

Alternatively, one end of the light-guiding member is provided with a light incident surface and a first reflecting surface inclined relative to the light incident surface, the first reflecting surface is located in the light incident direction of the light incident surface, at the bending position of the light-guiding member, a second reflecting surface and a third reflecting surface both inclined relative to the light incident surface are provided, the second reflecting surface is located in the reflected light direction of the first reflecting surface, the third reflecting surface is located in the reflected light direction of the second reflecting surface, the other end of the light-guiding member is provided with a light emergent surface, and a fourth reflecting surface and a fifth reflecting surface respectively arranged at an angle with the light emergent surface, one end of the fourth reflecting surface is located in the reflected light direction of the third reflecting surface, the fifth reflecting surface is located in the reflected light direction of the fourth reflecting surface, and the light emergent surface is located in the reflected light direction of the fifth reflecting surface.

Alternatively, the light-reflecting member further includes a second light-reflecting plate located in the first accommodating cavity, the second light-reflecting plate and the first light-reflecting plate are connected with each other at an angle, and the second light-reflecting plate and the mask cooperate with each other to clamp the light-guiding member.

Alternatively, the rear shell includes a first rear shell plate, and a second rear shell plate and a third rear shell plate respectively connected to the first rear shell plate, the first rear shell plate, the second rear shell plate and the third rear shell plate form a Z-shape, the mask includes a first mask plate, and a second mask plate and a third mask plate respectively connected to the first mask plate, the second mask plate and the third mask plate are arranged at intervals on the same side of the first mask plate, the second mask plate, the first rear shell plate, the second rear shell plate and a part of the first mask plate enclose to form the first accommodating cavity, the third mask plate, the third rear shell plate and another part of the first mask plate enclose to form the second accommodating cavity.

Alternatively, the light-reflecting member further includes a third light-reflecting plate connected to the second light-reflecting plate, a channel for avoiding the light-emitting source or the light-guiding member is provided between the second light-reflecting plate and the third light-reflecting plate, the first light-reflecting plate is in detachable connection with the third rear shell plate, and the part of the third light-reflecting plate extending out of the first accommodating cavity is in detachable connection with the second mask plate.

In a second aspect, the present application provides an instrument panel assembly, including the above-described ambient lighting structure.

In a third aspect, the present application provides a vehicle, including the above-described ambient lighting structure, and/or the instrument panel assembly as described above.

Compared with the prior art, the beneficial effects of the present application are as follows:
a light-emitting source, a light-guiding member and a light-reflecting member are arranged in the shell of the ambient lighting structure. When the light-emitting source emits light, the emitted light enters the light-guiding member. Since a semitransparent layer is provided on the end face of the light-transmitting portion of the shell that faces the light-reflecting member, after being transmitted inside the light-guiding member, the light is transmitted to the end face of the light-reflecting member that faces the semitransparent layer and/or the end face of the semitransparent layer that faces the light-reflecting member. At this time, among the light transmitted to the semitransparent layer, a part of the light passes through the semitransparent layer and exits from the light-transmitting portion of the shell, and the other part of the light is reflected to the light-reflecting member. The light-reflecting member then reflects the light to other parts of the semitransparent layer. In this way, the light is reflected back and forth between the semitransparent layer and the light-reflecting member. Due to light attenuation, the light exiting from the light-transmitting portion of the shell is weakened sequentially, which can present a luminous effect with extremely strong three-dimensional sense.

### Brief Description of the Drawings

FIG. 1 is a schematic structural diagram of an ambient lighting structure according to an embodiment of the present application;
FIG. 2 is an exploded schematic view of an ambient lighting structure according to an embodiment of the present application;
FIG. 3 is a schematic diagram of light transmission of an ambient lighting structure according to an embodiment of the present application;
FIG. 4 is a schematic structural diagram of a shell according to an embodiment of the present application;
FIG. 5 is a schematic structural diagram of a mask according to an embodiment of the present application;
FIG. 6 is a schematic structural diagram of a rear shell according to an embodiment of the present application;
FIG. 7 is a schematic structural diagram of a light-guiding member according to an embodiment of the present application;
FIG. 8 is a schematic structural diagram 1 of a light-reflecting member according to an embodiment of the present application;
FIG. 9 is a schematic structural diagram 2 of a light-reflecting member according to an embodiment of the present application;
FIG. 10 is a schematic diagram of light transmission of an ambient lighting structure according to another embodiment of the present application;
FIG. 11 is a schematic structural diagram of a light-guiding member according to another embodiment of the present application;
FIG. 12 is a schematic structural diagram of a light-guiding member according to yet another embodiment of the present application; and
FIG. 13 is a schematic structural diagram of a light-guiding member according to another embodiment of the present application.

### Description of Reference Signs:

1. shell; 11. mask; 111. first mask plate; 1111. light-transmitting portion; 112. second mask plate; 1121. first plug connection block; 113. third mask plate; 12. rear shell; 121. first rear shell plate; 122. second rear shell plate; 1221. first slot; 123. third rear shell plate; 1231. second slot; 13. accommodating cavity structure; 131. first accommodating cavity; 132. second accommodating cavity; 2. light-emitting source; 3. light-guiding member; 31. first reflecting surface; 32. second reflecting surface; 33. third reflecting surface; 34. fourth reflecting surface; 35. fifth reflecting surface; 36. light incident surface; 37. light emergent surface; 4. light-reflecting member; 41. first light-reflecting plate; 411. second plug connection block; 42. second light-reflecting plate; 43. third light-reflecting plate; 431. third slot; 44. channel.

### Detailed Description of the Invention

To make the above-mentioned objectives, features, and advantages of the present application more clearly understandable, specific embodiments of the present application will be described in detail below in conjunction with the accompanying drawings.

It should be noted that the terms such as "first" and "second" in the specification, claims, and the above-mentioned accompanying drawings of the present application are used to distinguish similar objects, and are not necessarily used to describe a specific order or sequence. It should be understood that the data used in this way can be interchanged under appropriate circumstances, so that the embodiments of the present application described herein can be implemented in an order other than those illustrated or described herein.

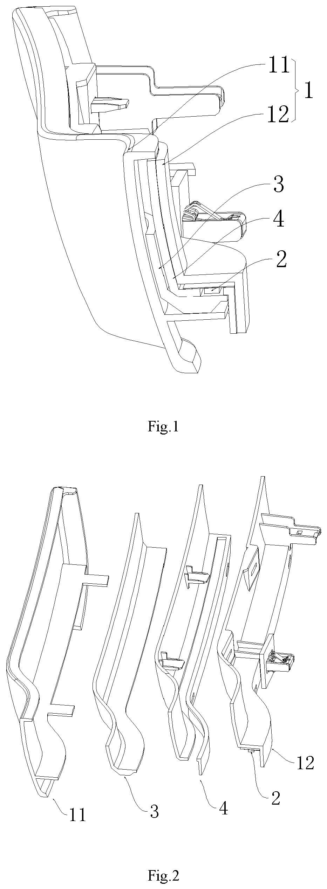

As shown in FIGS. 1,2, and 3, an embodiment of the present application provides an ambient lighting structure including a shell 1 and a light-emitting source 2, a light-guiding member 3 and a light-reflecting member 4 which are arranged in the shell 1, the shell 1 is provided with a light-transmitting portion 1111, the light-reflecting member 4 and the light-transmitting portion 1111 are spaced apart from each other, an end face of the light-transmitting portion 1111 that faces the light-reflecting member 4 being provided with a semitransparent layer, and the light-guiding member 3 is used for transmitting light emitted by the light-emitting source 2 and guiding same to an end face of the light-reflecting member 4 that faces the semitransparent layer and/or an end face of the semitransparent layer that faces the light-reflecting member 4.

In the present embodiment, the light-emitting source 2 includes a PCB board and LED lamp beads provided on the PCB board; the PCB boards can be connected to the vehicle-mounted terminal, and after the vehicle-mounted terminal controls the PCB boards to be powered on, the LED lamp beads emit light. In other embodiments, the light-emitting source 2 can also be a columnar long light guide. There is no restriction here and selections are made according to actual needs. The light-reflecting member 4 is a reflecting mirror. When light irradiates onto the reflecting mirror at a certain angle, the light is reflected, thereby transmitting the light to the semitransparent layer. The light-guiding member 3 is a light guide plate, whose shape is mainly set according to the position of the light-emitting source 2, and there is no specific limitation here, only required to be able to transmit and guide the light emitted by the light-emitting source 2 to the end face of the light-reflecting member 4 that faces the semitransparent layer or the end face of the semitransparent layer that faces the light-reflecting member 4. The end face of the light-reflecting member 4 that faces the semitransparent layer and the end face of the semitransparent layer that faces the light-reflecting member 4 may be an arc surface or a flat surface, there is no limitation here, and it depends on actual requirements; preferably, the end face of the light-reflecting member 4 that faces the semitransparent layer and the end face of the semitransparent layer that faces the light-reflecting member 4 are arc surfaces, which helps the light-emitting part of the shell 1 to present a lighting effect with a strong three-dimensional effect.

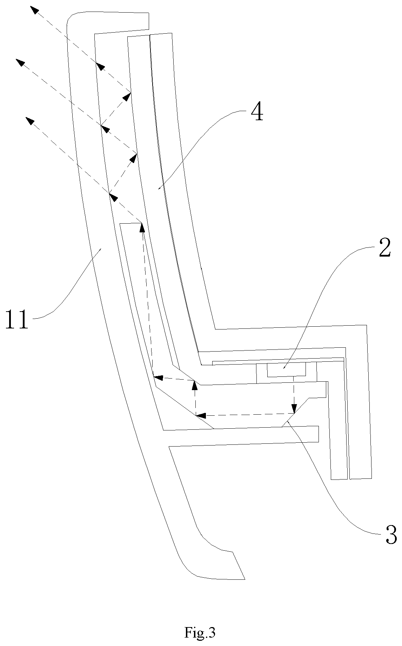

As shown in FIG. 3, a light-emitting source 2, a light-guiding member 3 and a light-reflecting member 4 are provided in the shell 1 of the ambient lighting structure. When the light-emitting source 2 emits light, the emitted lights will enter the light-guiding member 3. Since a semitransparent layer is provided on the end face of the light-transmitting portion 1111 of the shell 1 that faces the light-reflecting member 4, after being transmitted inside the light-guiding member 3, the light is transmitted to the end face of the light-reflecting member 4 that faces the semitransparent layer and/or the end face of the semitransparent layer that faces the light-reflecting member 4. At this time, among the lights transmitted to the semitransparent layer, a part of the light pass through the semitransparent layer and emits from the light-transmitting portion 1111 of the shell 1, and the other part of the light is reflected to the light-reflecting member 4. The light-reflecting member then reflects the lights to other parts of the semitransparent layer. In this way, the light is reflected back and forth between the semitransparent layer and the light-reflecting member 4. Due to light attenuation, the lights exiting from the light-transmitting portion 1111 of the shell 1 is weakened sequentially, which can present a luminous effect with extremely strong three-dimensional sense.

Alternatively, the semitransparent layer is a semitransparent electroplated layer or a semitransparent film; and/or, the end face of the light-reflecting member 4 that faces the light-transmitting portion 1111 is provided with a light-reflecting layer, and the light-reflecting layer is a high-brightness electroplated layer or a high-brightness reflective film.

In the present embodiment, the semitransparent electroplated layer is a semitransparent PVD electroplated layer, which is processed on the light-transmitting portion 1111 of the shell 1 through an electroplating process. After the semitransparent electroplated layer is processed, it and the light-transmitting portion 1111 of the shell 1 can be regarded as an integral whole, and no detachment will occur. The semitransparent film is semitransparent film paper, which is pasted at the light-transmitting portion 1111 of shell 1; since the price of semitransparent film paper is relatively low, production costs can be saved.

In the present embodiment, the high-brightness electroplated layer is a high-brightness PVD electroplated layer, which is processed at the light-reflecting member 4 through an electroplating process; after the high-brightness electroplated layer is processed, it and the light-reflecting member 4 can be regarded as a whole, and no detachment will occur. The high-brightness reflective film is high-brightness reflective film paper, which is pasted at the light-reflecting member 4; since the price of the high-brightness reflective film is relatively low, production costs can be saved.

Alternatively, the shell 1 includes a mask 11 and a rear shell 12 in detachable connection, the mask 11 is provided with a light-transmitting portion 1111, an accommodating cavity structure 13 is enclosed between the mask 11 and the rear shell 12, and the light-emitting source 2, the light-guiding member 3 and the light-reflecting member 4 are provided in the accommodating cavity structure 13.

In the present embodiment, the connection method of the mask 11 and the rear shell 12 includes but is not limited to plug connection, clamping connection, or screw connection; there is no limitation here, and it depends on actual requirements. The mask 11 adopts two-color injection molding, its light-transmitting portion 1111 is made of PC light-transmitting material, the opaque portion is made of PC+ABS black material, the inner surface of the mask 11 may be provided with a semitransparent layer only at the light-transmitting portion 1111, or may be provided with a semitransparent layer on the entire inner surface, there is no limitation here, which depends on actual requirements. After the mask 11 and the rear shell 12 are assembled, the mask 11 and the rear shell 12 enclose to form an accommodating cavity structure 13, and the light-emitting source 2, the light-guiding member 3 and the light-reflecting member 4 are provided in the accommodating cavity.

In this way, when the light-emitting source 2, the light-guiding member 3, or the light-reflecting member 4 are damaged, the mask 11 is separated from the rear shell 12, and maintenance personnel can inspect and replace the light-emitting source 2, the light-guiding member 3, or the light-reflecting member 4. When the mask 11 or the rear shell 12 is damaged, the maintenance personnel can separate the two and choose to replace the damaged component; compared with the non-detachable mask 11 and the rear shell 12, the detachable structure of the mask 11 and the rear shell 12 effectively reduces maintenance costs.

Alternatively, the light-reflecting member 4 includes a first light-reflecting plate 41, the accommodating cavity structure 13 includes a first accommodating cavity 131 and a second accommodating cavity 132 communicated with each other at an angle, the light-guiding member 3 is of a bent structure, a part of the light-guiding member 3 and the light-emitting source 2 are both located in the first accommodating cavity 131, the other part of the light-guiding member 3 and the first light-reflecting plate 41 are both located in the second accommodating cavity 132, and the first light-reflecting plate 41 and the light-transmitting portion 1111 are spaced apart from each other.

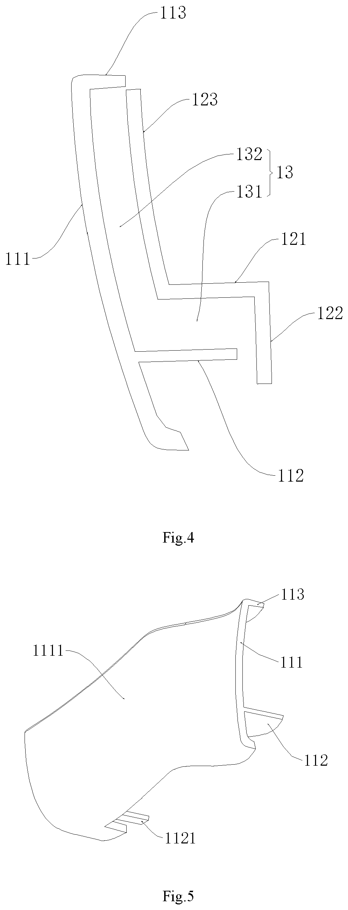

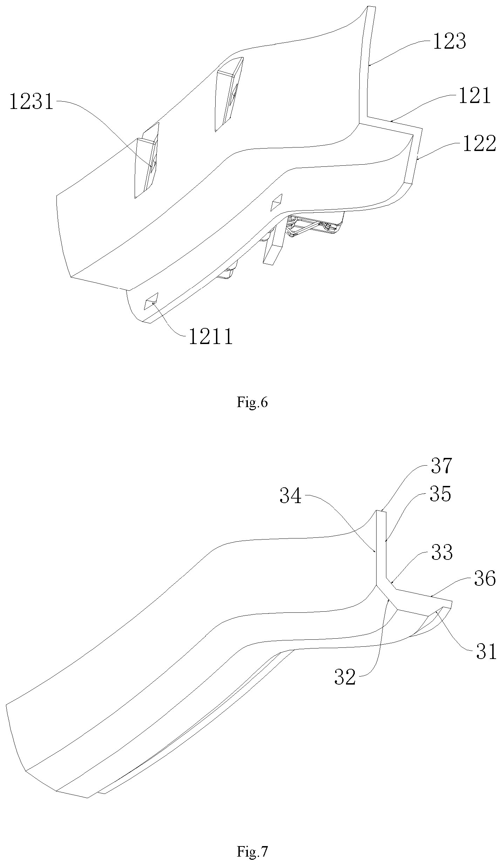

As shown in FIGS. 3 and 4, the cross-section of the accommodating cavity structure 13 is L-shaped. It should be understood that the L-shape here can be either a standard L-shape or an L-shape with a certain deformation, where a short side of the L-shape can be regarded as the first accommodating cavity 131, and a long side of the L-shape can be regarded as the second accommodating cavity 132. As shown in FIGS. 3 and 7, the light-guiding member 3 is of a bent structure, and its cross-section is also L-shaped. Similarly, the L-shape here can be either a standard L-shape or an L-shape with a certain deformation. A part of the light-guiding member 3 and the light-emitting source 2 are both located in the first accommodating cavity 131; in one embodiment, the light-emitting source 2 is in detachable connection with an inner wall of the first accommodating cavity 131, and the light-emitting source 2 is provided on one side of the light-guiding member 3 in the thickness direction. Another part of the light-guiding member 3 is located in the second accommodating cavity 132. As shown in FIGS. 3,8, and 9, the light-reflecting member 4 includes a first light-reflecting plate 41 located in the second accommodating cavity 132 and arranged at an interval from the light-transmitting portion 1111; specifically, the first light-reflecting plate 41 is in detachable connection with the inner wall of the second accommodating cavity 132, and there is a spacing of 5 mm to 8 mm between the first light-reflecting plate 41 and the semitransparent layer.

In the present embodiment, after the position of the light-emitting source 2 is adjusted, a shape of the light-guiding member 3 can be changed, so as to transmit and guide the light to an end face of the light-reflecting member 4 that faces the semitransparent layer or an end face of the semitransparent layer that faces the light-reflecting member 4.

In the present embodiment, the light-emitting source 2 can also be in detachable connection with the second rear shell plate 122 or the light-reflecting member 4, and the connection method between the light-emitting source 2 and the two includes but is not limited to adhesion or screw connection.

Alternatively, one end of the light-guiding member is provided with a light incident surface 36 and a first reflecting surface 31 inclined relative to the light incident surface 36, the first reflecting surface 31 is located in the light incident direction of the light incident surface 36, at the bending position of the light-guiding member 3, a second reflecting surface 32 and a third reflecting surface 33 both inclined relative to the light incident surface 36 are provided, the second reflecting surface 32 is located in the reflected light direction of the first reflecting surface 31, the third reflecting surface 33 is located in the reflected light direction of the second reflecting surface 32, the other end of the light-guiding member 3 is provided with a light emergent surface 37, and a fourth reflecting surface 34 and a fifth reflecting surface 35 respectively arranged at an angle with the light emergent surface 37, one end of the fourth reflecting surface 34 is located in the reflected light direction of the third reflecting surface 33, the fifth reflecting surface 35 is located in the reflected light direction of the fourth reflecting surface 34, and the light emergent surface 37 is located in the reflected light direction of the fifth reflecting surface 35.

In the present embodiment, the cross-sectional shape of the light-guiding member 3 is roughly L-shaped, which is provided with a light incident surface 36, a light emergent surface 37, and a plurality of reflecting surfaces, so as to transmit and guide the light to the end face of the semitransparent layer that faces the light-reflecting member 4. In one embodiment, as shown in FIG. 7, the light-guiding member 3 is provided with a light incident surface 36, a light emergent surface 37, a first reflecting surface 31, a second reflecting surface 32, a third reflecting surface 33, a fourth reflecting surface 34, and a fifth reflecting surface 35. Specifically, one end of the light-guiding member 3 is provided with the light incident surface 36 and the first reflecting surface 31 inclined relative to the light incident surface 36, and the first reflecting surface 31 is located in the light incident direction of the light incident surface 36, that is, the first reflecting surface 31 is located on the side of the light incident surface 36 away from the light-emitting source 2. The bent portion of the light-guiding member 3 is provided with the second reflecting surface 32 and the third reflecting surface 33 both inclined relative to the light incident surface 36, the second reflecting surface 32 is located in the light emergent direction of the first reflecting surface 31, and the third reflecting surface 33 is located in the light emergent direction of the second reflecting surface 32, that is, the second reflecting surface 32 is arranged opposite to the first reflecting surface 31 and their inclination directions are opposite, and the second reflecting surface 32 and the third reflecting surface 33 are arranged in parallel and at intervals; the other end of the light-guiding member 3 is provided with a light emergent surface 36 and a fourth reflecting surface 34 and a fifth reflecting surface 35 respectively arranged at an angle with the light emergent surface 36, one end of the fourth reflecting surface 34 is located in the reflected light direction of the third reflecting surface 33, the fifth reflecting surface 35 is located in the reflected light direction of the fourth reflecting surface 34, and the light emergent surface 37 is located in the reflected light direction of the fifth reflecting surface 35, that is, the light emergent surface 37 is located between the fourth reflecting surface 34 and the fifth reflecting surface 35, and one end of the fourth reflecting surface 34 is arranged opposite to and at an interval from the third reflecting surface 33. In this way, the light emitted by the light-emitting source 2 enters the interior of the light-guiding member 3 through the light incident surface 36, the first reflecting surface 31 reflects the light entering the light-guiding member 3 to the second reflecting surface 32, the second reflecting surface 32 then reflects the light to the third reflecting surface 33, the third reflecting surface 33 then reflects the light to the fourth reflecting surface 34, the fourth reflecting surface 34 reflects the light to the fifth reflecting surface 35, and the fifth reflecting surface 35 reflects the light to the light emergent surface 37 and transmits it to the end face of the semitransparent layer that faces the light-reflecting member 4.

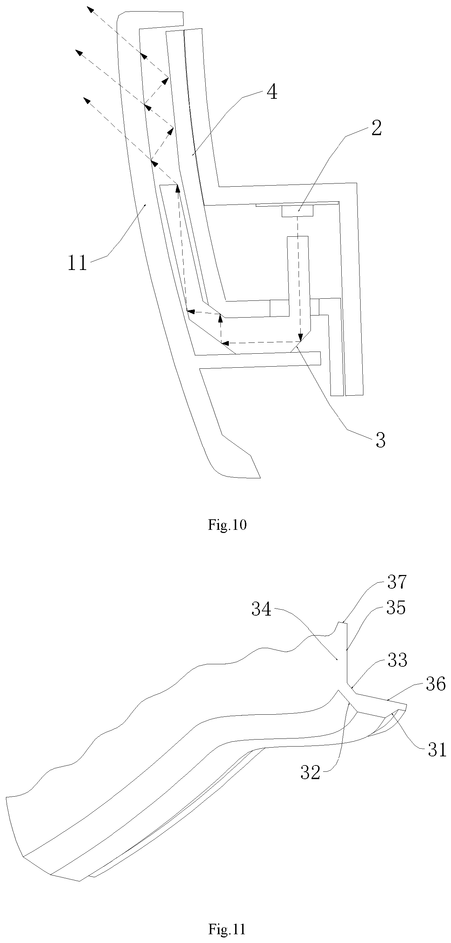

In other embodiments, as shown in FIG. 10, the cross-sectional shape of the light-guiding member 3 is approximately U-shaped; that is, compared with the light-guiding member 3 with an approximately L-shaped cross-sectional shape, the light-guiding member 3 is of an additional upwardly bent structure, and the light incident surface 36 is provided on this structure, while other parts of the light-guiding member 3 can remain unchanged.

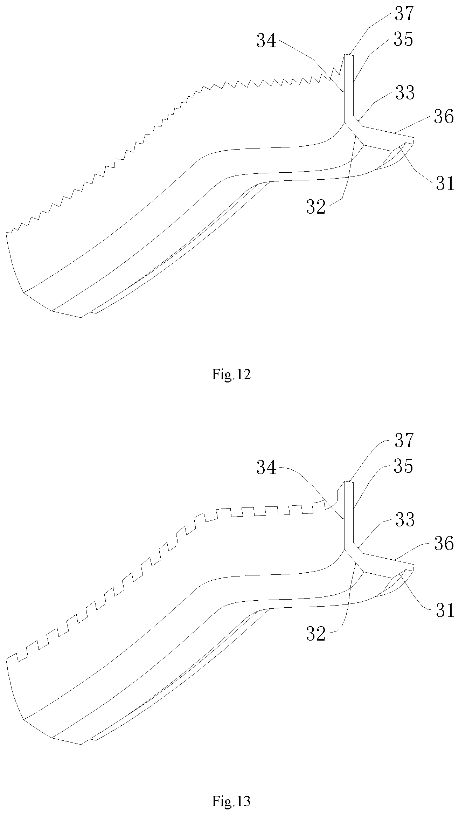

In the present embodiment, the light-guiding member 3 at the light emergent surface 37 can be made into a planar shape, and it can also be made into irregular shapes such as a zigzag shape, a wavy shape, and a city wall shape, so as to obtain different light emergent effects; there is no limitation here, which depends on actual requirements. For example, as shown in FIG. 7, the light-guiding member 3 is planar at the light emergent surface 37; as shown in FIG. 11, the light-guiding member 3 is wavy at the light emergent surface 37; as shown in FIG. 12, the light-guiding member 3 is serrated at the light emergent surface 37; as shown in FIG. 13, the light-guiding member 3 is battlement-shaped at the light emergent surface 37.

Alternatively, the light-reflecting member 4 further includes a second light-reflecting plate 42 located in the first accommodating cavity 131, the second light-reflecting plate 42 is angularly connected to the first light-reflecting plate 41, and the second light-reflecting plate 42 and the mask 11 cooperate with each other for clamping the light-guiding member 3.

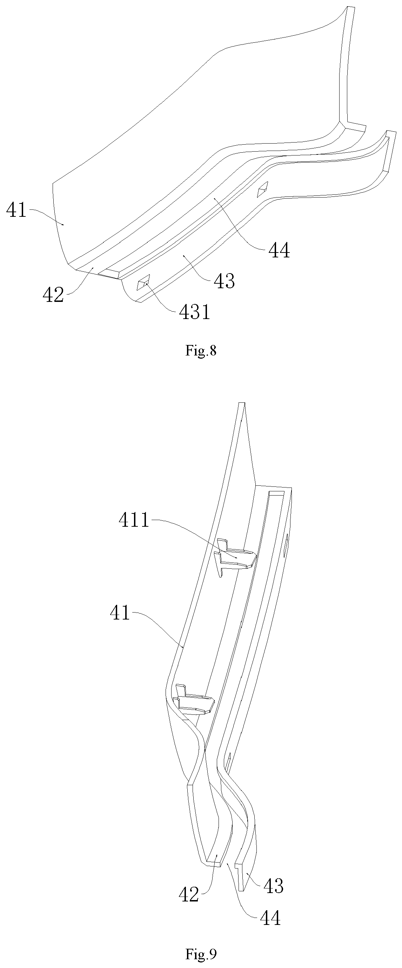

In the present embodiment, the angle between the first light-reflecting plate 41 and the second light-reflecting plate 42 is preferably an obtuse angle or a right angle; as shown in FIGS. 3 and 8, the angle between the first light-reflecting plate 41 and the second light-reflecting plate 42 is an obtuse angle; the second light-reflecting plate 42 and the second mask plate 112 (to be introduced later) of the mask 11 are arranged at an interval and respectively abut against the horizontal section of the light-guiding member 3; in other words, the horizontal section of the light-guiding member 3 is clamped between the second light-reflecting plate 42 and the second mask plate 112.

In this way, after the first light-reflecting plate 41 is fixed to the rear shell 12, the second light-reflecting plate 42 is located in the first accommodating cavity 131; at this time, the horizontal section of the light-guiding member 3 is attached to the second light-reflecting plate 42; after the mask 11 and the rear shell 12 are fixed, the horizontal section of the light-guiding member 3 is used to be clamped between the second light-reflecting plate 42 and the second mask plate 112 of the mask 11; in this way, the light-guiding member 3 does not need to be provided with complex connection structures to connect with other components.

In the present embodiment, the part of the light-guiding member 3 located in the first accommodating cavity 131 can be bonded to the second light-reflecting plate 42; thus, pre-positioning of the light-guiding member 3 can be achieved when installing same.

Alternatively, the rear shell 12 includes a first rear shell plate 121, and a second rear shell plate 122 and a third rear shell plate 123 respectively connected to the first rear shell plate 121, the first rear shell plate 121, the second rear shell plate 122 and the third rear shell plate 123 form a Z-shape, the mask 11 includes a first mask plate 111, and a second mask plate 112 and a third mask plate 113 respectively connected to the first mask plate 111, the second mask plate 112 and the third mask plate 113 are arranged at intervals on the same side of the first mask plate 111, the second mask plate 112, the first rear shell plate 121, the second rear shell plate 122 and a part of the first mask plate 111 enclose to form the first accommodating cavity 131, and the third mask plate 113, the third rear shell plate 123 and another part of the first mask plate 111 enclose to form the second accommodating cavity 132.

As shown in FIG. 6, the first rear shell 121, the second rear shell 122 and the third rear shell 123 form a Z-shape. It should be understood that the Z-shape here may be a standard Z-shape, and it may also be a Z-shape with a certain deformation. As shown in FIG. 5, the second mask plate 112 and the third mask plate 113 are spaced apart from each other and provided on the same side of the first mask plate 111. The second mask plate 112 is in detachable connection with the second rear shell plate 122; specifically, the second mask plate 112 is provided with a first plug block 1121, the second rear shell plate 122 is provided with a first slot 1221, and the second mask plate 112 is detachably connected to the second rear shell plate 122 through the first plug block 1121 and the first slot 1221.

In this way, the ambient lighting structure adopts a modular design to facilitate assembly, and after assembly is completed, the second mask plate 112, the first rear shell plate 121, the second rear shell plate 122 and a part of the first mask plate 111 enclose to form the first accommodating cavity 131, and the third mask plate 113, the third rear shell plate 123 and another part of the first mask plate 111 enclose to form the second accommodating cavity 132.

Alternatively, the light-reflecting member 4 further includes a third light-reflecting plate 43 connected to the second light-reflecting plate 42, a channel 44 for avoiding the light-emitting source 2 or the light-guiding member 3 is provided between the second light-reflecting plate 42 and the third light-reflecting plate 43, the first light-reflecting plate 41 is in detachable connection with the third rear shell plate 123, and the part of the third light-reflecting plate 43 extending out of the first accommodating cavity 131 is in detachable connection with the second mask plate 112.

As shown in FIGS. 8 and 9, the first light-reflecting plate 41, the second light-reflecting plate 42 and the third light-reflecting plate 43 form a Z-shape. It should be understood that the Z-shape here can be either a standard Z-shape or a Z-shape with a certain deformation. The first light-reflecting plate 41 is in detachable connection with the third rear shell plate 123; specifically, the first light-reflecting plate 41 is provided with a second plug block 411, the third rear shell plate 123 is provided with a second slot 1231, and the first light-reflecting plate 41 is detachably connected to the third rear shell plate 123 through the second plug block 411 and the second slot 1231. A channel 44 for avoiding the light-emitting source 2 is arranged between the second light-reflecting plate 42 and the third light-reflecting plate 43, the part of the third light-reflecting plate 43 extending out of the first accommodating cavity 131 is in detachable connection with the first mask plate 111, specifically, the part of the third light-reflecting plate 43 extending out of the first accommodating cavity 131 is provided with a through third slot 431, the third slot 431 on the third light-reflecting plate 43 is arranged correspondingly to the first slot 1221 on the second rear shell plate 122, and the first plug block 1121 of the second mask plate 112 sequentially penetrates through the third slot 431 on the third light-reflecting plate 43 and the first slot 1221 on the second rear shell plate 122. In this way, when the second mask plate 112 is connected to the second rear shell plate 122, the third light-reflecting plate 43 can also be fixed, effectively reducing the arrangement of the connection structure.

It should be understood that when the structural form of the light-guiding member 3 changes, the shape and position of other components can be correspondingly adaptively modified. For example, as shown in FIG. 10, when the cross-sectional shape of the light-guiding member 3 is approximately U-shaped, the light-emitting source 2 is no longer located in the channel 44, but a vertical section of the light-guiding member 3 passes through the channel 44; at this time, the light-emitting source 2 is located directly above the vertical section of the light-guiding member 3.

Another embodiment of the present application provides an instrument panel assembly, including the ambient lighting structure as described above.

The instrument panel assembly of the present embodiment and the above-mentioned ambient lighting structure have the same beneficial effects as the prior art, so they will not be repeated here.

Yet another embodiment of the present application provides a vehicle, including the ambient lighting structure as described above, and/or the instrument panel assembly as described above.

The vehicle of the present embodiment has the same beneficial effects as the above-mentioned ambient lighting structure relative to the prior art, so it will not be repeated here.

It should be understood by the reader that, in the description of this specification, references to terms such as "one embodiment", "some embodiments", "example", "specific example", or "some examples" mean that the specific features, structures, materials, or characteristics described in connection with the embodiment or example are included in at least one embodiment or example of the present application. In this specification, the schematic representations of the above terms are not necessarily directed to the same embodiment or example. Furthermore, the specific features, structures, materials, or characteristics described may be combined in any suitable manner in any one or more embodiments or examples. In addition, a person skilled in the art may combine and integrate the different embodiments or examples described in this specification and the features of the different embodiments or examples, provided that there is no contradiction between them.

Although the present application is disclosed as above, the protection scope of the present application is not limited thereto. A person skilled in the art may make various changes and modifications without departing from the spirit and scope of the present disclosure, and all such changes and modifications shall fall within the protection scope of the present application.

## Claims

1. An ambient lighting structure, comprising a shell, and a light-emitting source, a light-guiding member and a light-reflecting member which are arranged in the shell, the shell is provided with a light-transmitting portion, the light-reflecting member and the light-transmitting portion are spaced apart from each other, an end face of the light-transmitting portion that faces the light-reflecting member being provided with a semitransparent layer; and the light-guiding member is used for transmitting light emitted by the light-emitting source and guiding same to an end face of the light-reflecting member that faces the semitransparent layer and/or to an end face of the semitransparent layer that faces the light-reflecting member.

2. The ambient lighting structure according to claim 1, wherein the semitransparent layer is a semitransparent electroplated layer or a semitransparent film; and/or, the end face of the light-reflecting member that faces the light-transmitting portion is provided with a light-reflecting layer, and the light-reflecting layer is a high-brightness electroplated layer or a high-brightness reflective film.

3. The ambient lighting structure according to claim 1, wherein the shell comprises a mask and a rear shell in detachable connection, the mask is provided with the light-transmitting portion, the mask and the rear shell enclose to form an accommodating cavity structure, and the light-emitting source, the light-guiding member and the light-reflecting member are arranged in the accommodating cavity structure.

4. The ambient lighting structure according to claim 3, wherein the light-reflecting member comprises a first light-reflecting plate, the accommodating cavity structure comprises a first accommodating cavity and a second accommodating cavity communicated with each other at an angle, the light-guiding member is of a bent structure, a part of the light-guiding member and the light-emitting source are both located in the first accommodating cavity, the other part of the light-guiding member and the first light-reflecting plate are both located in the second accommodating cavity, and the first light-reflecting plate and the light-transmitting portion are spaced apart from each other.

5. The ambient lighting structure according to claim 4, wherein one end of the light-guiding member is provided with a light incident surface and a first reflecting surface inclined relative to the light incident surface, the first reflecting surface is located in the light incident direction of the light incident surface, at the bending position of the light-guiding member, a second reflecting surface and a third reflecting surface both inclined relative to the light incident surface are provided, the second reflecting surface is located in the reflected light direction of the first reflecting surface, the third reflecting surface is located in the reflected light direction of the second reflecting surface, the other end of the light-guiding member is provided with a light emergent surface, and a fourth reflecting surface and a fifth reflecting surface respectively arranged at an angle with the light emergent surface, one end of the fourth reflecting surface is located in the reflected light direction of the third reflecting surface, the fifth reflecting surface is located in the reflected light direction of the fourth reflecting surface, and the light emergent surface is located in the reflected light direction of the fifth reflecting surface.

6. The ambient lighting structure according to claim 4, wherein the light-reflecting member further comprises a second light-reflecting plate located in the first accommodating cavity, the second light-reflecting plate and the first light-reflecting plate are connected with each other at an angle, and the second light-reflecting plate and the mask cooperate with each other to clamp the light-guiding member.

7. The ambient lighting structure according to claim 4, wherein the rear shell comprises a first rear shell plate, and a second rear shell plate and a third rear shell plate respectively connected to the first rear shell plate, the first rear shell plate, the second rear shell plate and the third rear shell plate form a Z-shape, the mask comprises a first mask plate, and a second mask plate and a third mask plate respectively connected to the first mask plate, the second mask plate and the third mask plate are arranged at intervals on the same side of the first mask plate, the second mask plate, the first rear shell plate, the second rear shell plate and a part of the first mask plate enclose to form the first accommodating cavity, the third mask plate, the third rear shell plate and another part of the first mask plate enclose to form the second accommodating cavity, and the second mask plate is in detachable connection with the second rear shell plate.

8. The ambient lighting structure according to claim 7, wherein the light-reflecting member further comprises a third light-reflecting plate connected to the second light-reflecting plate, a channel for avoiding the light-emitting source or the light-guiding member is provided between the second light-reflecting plate and the third light-reflecting plate, the first light-reflecting plate is in detachable connection with the third rear shell plate, and the part of the third light-reflecting plate extending out of the first accommodating cavity is in detachable connection with the second mask plate.

9. An instrument panel assembly, comprising the ambient lighting structure according to any one of claims 1 to 8.

10. A vehicle, comprising the ambient lighting structure according to any one of claims 1 to 8, and/or the instrument panel assembly according to claim 9.
